# EUROPEAN PATENT APPLICATION

(11) **EP 4 207 897 A1**
(43) Date of publication of application: **05.07.2023**
(21) Application number: 20951527.9
(22) Date of filing: 28.08.2020
(51) Int. Cl.: H04W 72/04, H04W 72/12

(54) **TERMINAL, WIRLESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); SUN, Weiqi, Beijing 100190 (CN); CHEN, Lan, Beijing 100190 (CN)
(74) Representative: Hoffmann Eitle
(86) International application number: PCT/JP2020/032673
(87) International publication number: WO 2022/044277

(57) **Abstract**

An aspect of a terminal of the present disclosure includes: a receiver that receives a plurality of pieces of downlink control information respectively transmitted by using a plurality of downlink control channels allocated to different time domains; and a controller that controls at least one of reception and transmission of a physical shared channel scheduled by the plurality of pieces of downlink control information, in which when a case in which contents of timing-related information respectively included in the plurality of pieces of downlink control information are different is supported, the controller determines at least one of a reception timing and a transmission timing of the physical shared channel based on the timing-related information included in each of the pieces of downlink control information with a downlink control channel corresponding to each of the pieces of downlink control information as a time reference.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (Non Patent Literature 1). Furthermore, the specifications of LTE-Advanced (3GPP Rel. 10 to 14) have been drafted for the purpose of further increasing capacity and advancement of LTE (third generation partnership project (3GPP) release (Rel.) 8 and 9).

Successor systems to LTE (for example, also referred to as 5th generation mobile communication system (5G), 5G+ (plus), 6th generation mobile communication system (6G), New Radio (NR), or 3GPP Rel. 15 and subsequent releases) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In a future radio communication system (for example, NR), it is considered that one or a plurality of transmission/reception points (TRP) (multi-TRPs) perform DL transmission (for example, PDSCH transmission) to a user terminal (user terminal, user equipment (UE)) using one or a plurality of panels (multi-panel).

Furthermore, in the NR, it is assumed that repeated transmission is applied to a predetermined channel (for example, PDCCH). For example, it is conceivable to control the schedule of DL transmission/UL transmission by using a plurality of PDCCHs to which repeated transmission is applied from the multi-panel/TRP.

However, in the NR specification so far, how to control the repeated transmission from one or more TRPs has not been sufficiently studied.

Therefore, an object of the present disclosure is to provide a terminal, a radio communication method, and a base station capable of appropriately performing communication even in a case where repeated transmission is applied to a DL channel transmitted from one or more TRPs.

### Solution to Problem

A terminal according to an aspect of the present disclosure includes: a receiver that receives a plurality of pieces of downlink control information respectively transmitted by using a plurality of downlink control channels allocated to different time domains; and a controller that controls at least one of reception and transmission of a physical shared channel scheduled by the plurality of pieces of downlink control information, in which when a case in which contents of timing-related information respectively included in the plurality of pieces of downlink control information are different is supported, the controller determines at least one of a reception timing and a transmission timing of the physical shared channel based on the timing-related information included in each of the pieces of downlink control information with a downlink control channel corresponding to each of the pieces of downlink control information as a time reference.

### Advantageous Effects of Invention

According to one aspect of the present disclosure, communication can be appropriately performed even when repeated transmission is applied to DL channels transmitted from one or more TRPs.

### Brief Description of Drawings

[FIG. 1] Fig. 1 is a diagram illustrating an example of schedule control of a physical shared channel based on PDCCH/DCI.
[FIG. 2] Figs. 2A to 2D are diagrams illustrating an example of a multi-TRP scenario.
[FIG. 3] Fig. 3 is a diagram illustrating an example of PDCCH repeated transmission.
[FIG. 4] Fig. 4 is a diagram illustrating an example of PDCCH repeated transmission control in a second aspect.
[FIG. 5] Figs. 5A and 5B are diagrams illustrating another example of PDCCH repeated transmission control in the second aspect.
[FIG. 6] Figs. 6A and 6B are diagrams illustrating another example of PDCCH repeated transmission control in the second aspect.
[FIG. 7] Figs. 7A and 7B are diagrams illustrating another example of PDCCH repeated transmission control in the second aspect.
[FIG. 8] Fig. 8 is a diagram illustrating an example of PDCCH repeated transmission control in a third aspect.
[FIG. 9] Fig. 9 is a diagram illustrating an example of a schematic configuration of a radio communication system according to one embodiment.
[FIG. 10] Fig. 10 is a diagram illustrating an example of a configuration of a base station according to one embodiment.
[FIG. 11] Fig. 11 is a diagram illustrating an example of a configuration of a user terminal according to one embodiment.
[FIG. 12] Fig. 12 is a diagram illustrating an example of a hardware configuration of a base station and a user terminal according to one embodiment.

### Description of Embodiments

### <Allocation of Time Domain Resource>

In the existing system (for example, Rel. 15), resource allocation information of a time domain of a physical shared channel (at least one of a PDSCH and a PUSCH) is included in the downlink control information (DCI). A network (for example, a base station) notifies UE of information regarding the time domain resource on which the physical shared channel scheduled by the DCI is scheduled by using a predetermined field (for example, a TDRA field) included in the DCI.

The information regarding the time domain resource may include, for example, at least one of information (for example, a slot offset K0) indicating an offset between the DCI and the physical shared channel, information (for example, a start symbol S) indicating a start symbol, and information (for example, a length L) indicating a length of the physical shared channel.

Each bit information (or a code point) notified in the TDRA field may be associated with a different time domain resource allocation candidate (or entry). For example, a table (for example, a TDRA table) in which each bit information is associated with a time domain resource allocation candidate (K0, S, L) may be defined. The time domain resource allocation candidate may be predefined in a specification, or may be notified/configured to the UE by higher layer signaling.

### [PDSCH]

The UE may determine a row index (entry number or entry index) in the predetermined table based on a value of the TDRA field in the DCI (for example, DCI format 1_0/1_1/1_2). The predetermined table may include at least one of information indicating a time offset (for example, the slot offset K0) between the DCI and the PDSCH scheduled by the DCI, information indicating a mapping type of the PDSCH, and a start symbol S and a time length L of the PDSCH. A combination of the start symbol S and the time length L of the PDSCH may be referred to as a start and length indicator (SLIV).

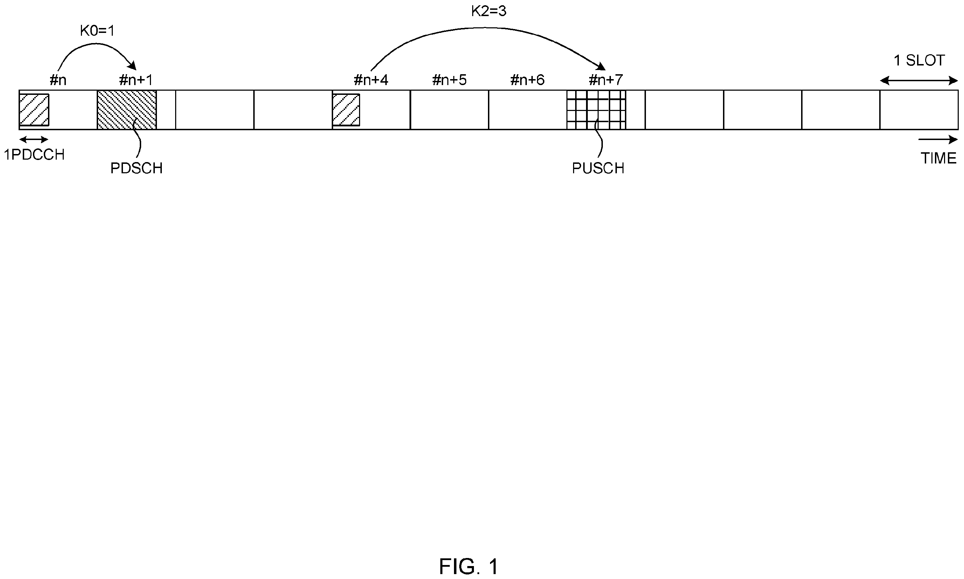

The UE may determine the time domain resource on which the PDSCH is scheduled based on the value of the predetermined field included in the DCI and at least one of the slot offset K0 information, the mapping type, the start symbol S, the symbol length L, and the SLIV specified in the table (See Fig. 1). Note that a reference point of the start symbol S and the symbol length L may be controlled based on the starting position (head symbol) of the slot. Furthermore, the start symbol S, the symbol length L, and the like may be defined according to the mapping type of the PDSCH.

As illustrated in Fig. 1, the UE determines a slot in which a PDSCH is scheduled by using DCI (alternatively, the PDCCH used for transmission of the DCI) as a reference point in a time domain. For example, when receiving the DCI for scheduling the PDSCH in a slot #n, the UE may determine the slot for receiving the PDSCH (allocated to the PDSCH) on the basis of the number n of the slot and at least one of PDSCH subcarrier spacing µ_{PDSCH}, PDCCH subcarrier spacing µ_{PDCCH}, or the time offset K0. Here, a case where the slot offset K0 = 1 and the subcarrier spacing between the PDSCH and the PDCCH is the same is illustrated.

Furthermore, the UE determines the allocation of the PDSCH with reference to the start point of the slot to which the PDSCH is allocated for the resource allocation information (for example, SLIV) specified in the TDRA field. Note that the reference point may be referred to as a reference point.

### [PUSCH]

The UE may determine a row index (entry number or entry index) in the predetermined table based on a value of the TDRA field in the DCI (for example, DCI format 0_0/0_1/0_2). The predetermined table may include at least one of information indicating a time offset (for example, a slot offset K2) between the DCI and the PUSCH scheduled by the DCI, information indicating a mapping type of the PUSCH, and a start symbol S and a time length L of the PUSCH. A combination of the start symbol S and the time length L of the PUSCH may be referred to as a start and length indicator (SLIV).

The UE may determine the time domain resource on which the PUSCH is scheduled based on the value of the predetermined field included in the DCI and at least one of the slot offset K2 information, the mapping type, the start symbol S, the symbol length L, and the SLIV specified in the table (See Fig. 1). Note that a reference point of the start symbol S and the symbol length L may be controlled based on the starting position (head symbol) of the slot. Furthermore, the start symbol S, the symbol length L, and the like may be defined according to the mapping type of the PDSCH.

As illustrated in Fig. 1, the UE determines a slot in which a PUSCH is scheduled by using DCI (alternatively, the PDCCH used for transmission of the DCI) as a reference point in time domain. For example, when receiving the DCI for scheduling the PUSCH in the slot #n+4, the UE may determine the slot for transmitting the PUSCH (allocated to the PUSCH) based the basis of the number n+4 of the slot and at least one of PUSCH subcarrier spacing µ_{PDSCH}, PUCCH subcarrier spacing µ_{PDCCH}, and the time offset K2. Here, a case where the slot offset K2 = 3 and the subcarrier spacing between the PDSCH and the PDCCH is the same is illustrated.

Furthermore, the UE determines the allocation of the PUSCH with reference to the start point of the slot to which the PUSCH is allocated for the resource allocation information (for example, SLIV) specified in the TDRA field.

### (Multi-TRPs)

In NR, it is considered that one or a plurality of transmission/reception points (TRPs)(multi-TRPs) performs DL transmission to UE by using one or a plurality of panels (multi-panel). Furthermore, studies are underway to allow the UE to perform UL transmission to one or a plurality of TRPs.

Note that the plurality of TRPs may correspond to the same cell identifier (ID), or may correspond to different cell IDs. The cell ID may be a physical cell ID or a virtual cell ID.

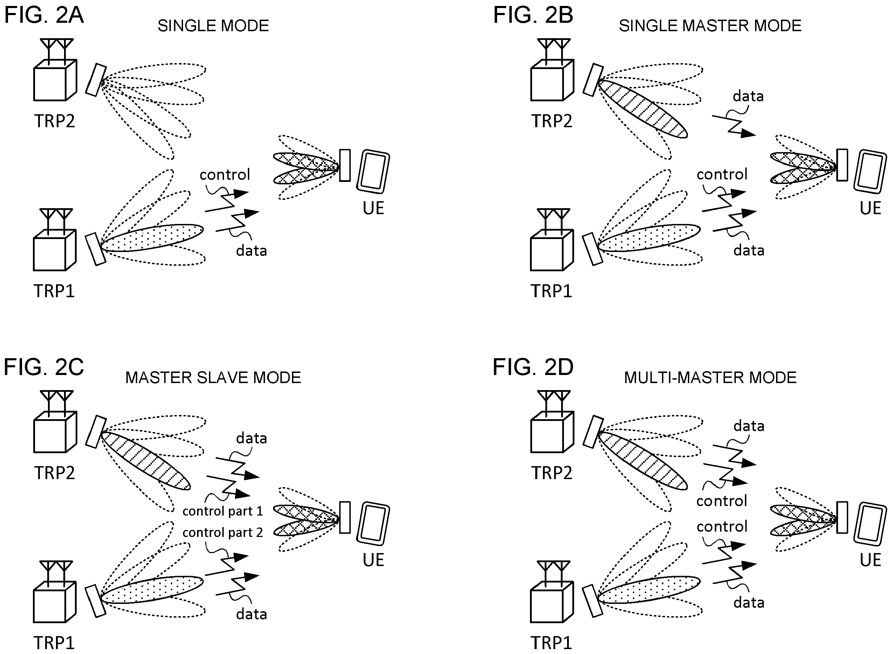

Figs. 2A to 2D illustrate one example of a multi-TRP scenario. In these examples, it is assumed that each TRP is capable of transmitting four different beams, but is not limited to this.

Fig. 2A illustrates one example of a case where only a single TRP (TRP1 in the present example) of multi-TRPs performs transmission to UE (which may be referred to as single mode, single TRP, and the like). In this case, TRP1 transmits both a control signal (PDCCH) and a data signal (PDSCH) to the UE.

Fig. 2B illustrates one example of a case where only a single TRP (TRP1 in present example) of the multi-TRPs transmits a control signal to the UE and the multi-TRPs transmit a data signal (which may be referred to as single master mode). The UE receives each PDSCH transmitted from the multi-TRPs based on one piece of downlink control information (DCI).

Fig. 2C illustrates one example of a case where each of the multi-TRPs transmits a part of a control signal to the UE and the multi-TRPs transmit a data signal (which may be referred to as master slave mode). A TRP1 may transmit a part 1 of a control signal (DCI). A TRP2 may transmit a part 2 of the control signal (DCI). The part 2 of the control signal may depend on the part 1. The UE receives each PDSCH transmitted from the multi-TRPs based on these parts of the DCI.

Fig. 2D illustrates one example of a case where each of the multi-TRPs transmits separate control signals to the UE and the multi-TRPs transmit a data signal (which may be referred to as multi-master mode). A first control signal (DCI) may be transmitted at the TRP1, and a second control signal (DCI) may be transmitted at the TRP2. The UE receives each PDSCH transmitted from the multi-TRPs based on the DCI.

In a case where a plurality of PDSCH (which may be referred to as multiple PDSCHs) from the multiple TRPs as illustrated in Fig. 2B is scheduled using one piece of DCI, the DCI may be referred to as single DCI (S-DCI, single PDCCH). Furthermore, in a case where a plurality of PDSCH from the multi-TRPs as illustrated in Fig. 2D is scheduled using a plurality of pieces of DCI, the plurality of pieces of DCI may be referred to as multi-DCI (M-DCI, multi-PDCCHs (multiple PDCCHs)).

A different codeword (CW) and a different layer may be transmitted from each TRP of the multi-TRPs. Non-coherent joint transmission (NCJT) is considered as one form of multi-TRPs transmission.

In the NCJT, for example, the TRP1 performs modulation mapping and layer mapping on a first codeword, performs first precoding in a first number of layers (e.g., two layers), and transmits a first PDSCH. Furthermore, the TRP2 performs modulation mapping and layer mapping on a second codeword, performs second precoding in a second number of layers (e.g., two layers), and transmits a second

### PDSCH.

Note that a plurality of PDSCHs (multi-PDSCHs) subjected to NCJT may be defined as partially or completely overlapping with respect to a time domain and/or a frequency domain. That is, the first PDSCH from a first TRP and the second PDSCH of a second TRP may overlap at least one of time resources or frequency resources.

The first PDSCH and the second PDSCH may be assumed not to be in a Quasi-Co-Location (QCL) relationship (not quasi-co-located). Reception of the multi-PDSCHs may be replaced with simultaneous reception of PDSCHs that are not of a certain QCL type (for example, QCL type D).

In URLLC for multi-TRP, support of PDSCH (transport block (TB) or codeword (CW)) repetition spanning multiple TRPs has been studied. Support for iterative procedures (URLLC schemes, for example, schemes 1, 2a, 2b, 3, 4) spanning multi-TRPs on a frequency domain, a layer (spatial) domain, or a time domain has been studied. In Scheme 1, multi-PDSCHs from multi-TRPs undergo space division multiplexing (SDM). In Schemes 2a and 2b, PDSCH from multi-TRPs undergo frequency division multiplexing (FDM). In Scheme 2a, the redundancy version (RV) is the same for multi-TRPs. In Scheme 2b, the RVs may be the same or different for multi-TRPs. In Schemes 3 and 4, multi-PDSCHs from multi-TRPs undergo time division multiplexing (TDM). In Scheme 3, multi-PDSCHs from multi-TRPs are transmitted in one slot. In Scheme 4, multi-PDSCHs from multi-TRPs are transmitted in different slots.

Such a multi-TRPs scenario enables more flexible transmission control to be performed using a high-quality channel.

NCJT with multiple TRPs/panels may use a high rank. Both single DCI (single PDCCH, e.g., Fig. 2B) and multi-DCI (multi-PDCCHs, e.g., Fig. 2D) may be supported to support ideal and non-ideal backhaul among the plurality of TRPs. For both the single DCI and the multi-DCI, the maximum number of TRPs may be two.

Extension of TCI has been considered for single PDCCH designs (mainly for ideal backhaul). Each TCI code point in the DCI may correspond to one or two TCI states. A TCI field size may be the same as that in Rel. 15.

By the way, in Rel. 17 and subsequent, it is also assumed that repeated transmission (PDCCH repetition) is applied to the PDCCH (or DCI) transmitted from one or more TRPs. For example, it is conceivable to use a plurality of PDCCHs (or DCI) transmitted from one or more TRPs to perform one or more signal/channel schedules or transmission/reception instructions.

The PDCCH/DCI to which repeated transmission is applied may be referred to as multi-PDCCHs/multi-DCI. The repeated transmission of the PDCCH may be read as PDCCH repetition, a plurality of transmissions of the PDCCH, multi-PDCCH transmission, or multiple PDCCH transmission.

The multi-PDCCHs/multi-DCI may be respectively transmitted from different TRPs. The multi-PDCCH/DCI may be multiplexed by time multiplexing (TDM)/frequency multiplexing (FDM)/spatial multiplexing (SDM). For example, in a case where repetition of PDCCHs (TDM PDCCH repetition) is performed using time multiplexing, PDCCHs transmitted from different TRPs are allocated to different time domains.

It is assumed that one or more physical shared channels are scheduled using the multi-PDCCH/DCI. The one or more physical shared channels may be, for example, the same (or one) physical shared channel or a plurality of physical shared channels scheduled in the same time domain. In such a case, how to control the schedule control (for example, the contents notified by each DCI, the reference point at the time of scheduling, and the like.) becomes a problem.

For example, in a case where the content (for example, DCI payload) of the DCI respectively transmitted on the PDCCHs in different time domains is the same, how the UE applies/interprets the instruction (for example, the same value) of a time relationship of each PDCCH/DCI to control the schedule becomes a problem.

Alternatively, in a case where it is supported/allowed that the content (for example, DCI payload) of the DCI respectively transmitted on the PDCCHs in different time domains is set differently, it becomes a problem how the UE applies/interprets the instruction (for example, different values) of a time relationship of each PDCCH/DCI to control the schedule.

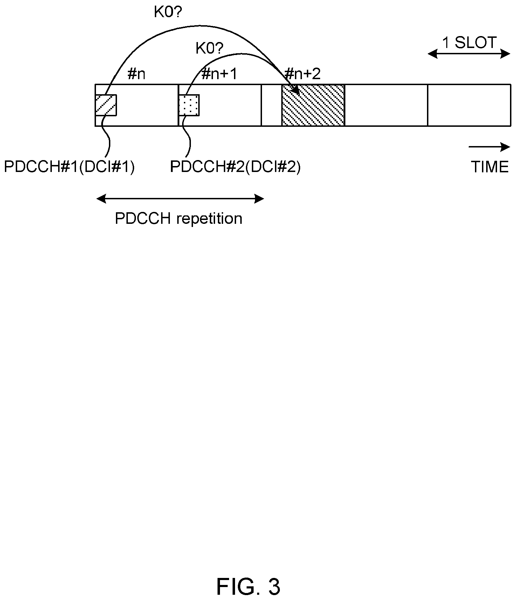

Fig. 3 illustrates an example of a case where the PDCCH is repeatedly transmitted (alternatively, arranged) in the slots #n to #n+1. The PDCCH (or the control resource set) arranged in each slot may be arranged in the entire time domain (for example, all symbols) in the slot, or may be arranged in a part of the time domain (for example, some symbols that are consecutive or nonconsecutive).

In this case, the schedule of the physical shared channel may be controlled on the basis of the timing-related information (for example, time domain resource allocation information) included in each PDCCH transmitted in different time domains (here, different slots). The PDCCHs respectively transmitted in different time domains may be configured to schedule the same transport block (or a physical shared channel that transmits the same transport block.).

However, in a case where a schedule is performed using a plurality of PDCCHs/DCI, how to control the setting of the timing-related information (for example, time domain resource allocation information) included in each PDCCH/DCI or the interpretation in the UE becomes a problem.

The present inventors have studied how to set the time-related information included in each PDCCH/DCI or interpret the time-related information in the UE in a case where a schedule is performed using the plurality of PDCCHs/DCI, and have conceived the present embodiment.

Hereinafter, embodiments according to the present disclosure will be described in detail with reference to the drawings. Note that the following respective aspects may be used alone, or may be applied by combining at least two of them.

Furthermore, in the present disclosure, "A/B" is interchangeable with "A and/or B" and "A/B/C" is interchangeable with "at least one of A, B, and C".

### (First Aspect)

In a first aspect, notification/configuration of information regarding PDCCH repeated transmission will be described.

The information regarding the PDCCH repeated transmission may be a transmission condition/transmission parameter applied to the PDCCH repeated transmission. The transmission condition/transmission parameter applied to the PDCCH repeated transmission may be at least one of a PDCCH repeated number (for example, PDCCH repetition number), a time interval in which the PDCCH repetition is applied, and an interval/offset between PDCCHs in the PDCCH repeated transmission.

A PDCCH (for example, multi-PDCCHs) to which repeated transmission is applied may be transmitted from each of a plurality of TRPs. Different QCL (or TCI, beam) may be applied to the multi-PDCCHs (or PDCCHs transmitted from different TRPs.). In the present disclosure, the PDCCH repeated transmission is applicable to a case where the PDCCH repeated transmission is transmitted from one or a plurality of TRPs.

The information regarding the PDCCH repeated transmission (for example, PDCCH repetition number) may be notified/configured from a network (for example, a base station) to UE. The information regarding the PDCCH repeated transmission may be notified/configured to the UE based on at least one of the following Option 1-1 to Option 1-2.

### <Option 1-1>

The information regarding the PDCCH repeated transmission may be notified/configured from the base station to the UE by utilizing higher layer signaling (for example, at least one of an RRC parameter and MAC CE).

### <Option 1-2>

The information regarding the PDCCH repeated transmission may be dynamically notified from the base station to the UE by using downlink control information (for example, DCI). The information regarding the PDCCH repeated transmission may be notified using a new field set in the DCI, or may be notified using a field set in the existing system.

The information regarding the PDCCH repeated transmission may be included in each PDCCH/DCI to which the repeated transmission is applied. In this case, the number of PDCCH repetitions included in each PDCCH/DCI may be the same value. Alternatively, a different value (for example, the remaining number of repetitions) may be set for the number of PDCCH repetitions included in each PDCCH/DCI.

A size (for example, the number of bits) of the field used for notification of the information regarding the repeated transmission may be determined based on the maximum number of PDCCH repetitions. The UE may determine the maximum number of the PDCCH repetitions based on capability information (for example, UE capability) reported by the UE.

Alternatively, the maximum number of the PDCCH repetitions may be notified/configured from the base station to the UE by higher layer signaling or the like. In this case, the base station may notify the UE of the PDCCH repetition number actually applied by using the DCI. The size (or the number of bits) of the field used for notification of the PDCCH repetition number may be determined based on the maximum number of the PDCCH repetitions notified/set in the higher layer signaling.

Whether or not the notification of the number of PDCCH repetitions using the DCI is applied may be set by predetermined higher layer signaling. In a case where the predetermined higher layer signaling is configured, the UE may assume that the field for notification of the PDCCH repetition number exists in the DCI, and in a case where the predetermined higher layer signaling is not configured, the UE may assume that the field for notification of the PDCCH repetition number does not exist in the DCI.

As described above, in a case where the PDCCH repeated transmission is applied, the information regarding the PDCCH repeated transmission is notified/set from the base station to the UE, whereby the UE can appropriately grasp the transmission condition/transmission parameter applied to the PDCCH repeated transmission.

### (Second Aspect)

In a second aspect, a case where DCI (same DCI payload content) having the same payload content is transmitted by PDCCH repetition (TDM PDCCH repetition) transmitted in different time domains will be described. That is, this corresponds to a case where the same DCI payload content is notified to the UE by the multi-PDCCHs.

The same payload content may be a case where values of all fields included in each DCI are set to be the same. Alternatively, the values of some predetermined fields of the fields included in each DCI may be set to be the same.

The predetermined field may be a notification field of the time-related information. The time-related information may be replaced with timing-related information, a time-related instruction, or a timing-related instruction (for example, timing related indication). For example, the predetermined field may be at least one of a time domain resource allocation (for example, time domain resource assignment) field and a HARQ-ACK feedback timing instruction (for example, PDSCH-to-HARQ feedback timing indicator) field.

In a case where a predetermined physical shared channel is scheduled by a plurality of pieces of DCI respectively transmitted on PDCCHs allocated to different time domains, and content (for example, payload content) of the plurality of pieces of DCI is the same, the UE may interpret/apply the time-related information (alternatively, the timing-related information) included in the DCI based on a specific time reference.

The time reference may be read as a timing reference, a reference timing, a reference point, a time reference point, a reference in the time domain, or a reference point in the time domain.

The specific time reference may be a specific PDCCH (alternatively, transmission timing of a specific PDCCH) among a plurality of repeatedly transmitted PDCCHs. For example, it may be the first transmitted (or received) PDCCH or the first allocated PDCCH in the time domain. The UE may use the head symbol of the PDCCH transmitted first as the time reference, or may use the last symbol of the PDCCH as the time reference.

For example, the UE may determine a time domain resource of a signal/channel (for example, a physical shared channel) scheduled in each DCI based on a specific time reference and a notification field of time-related information included in each DCI (or at least one DCI).

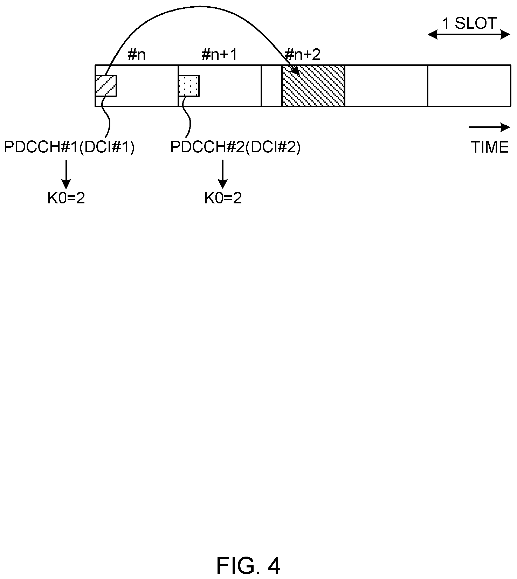

For example, a case where the slot offset K0 designated by each DCI is the same value (for example, K0 = 2) is assumed (See Fig. 4). The UE may determine that the PDSCH is scheduled in a slot (here, #n+2) that is K0 away from a particular time reference (here, a transmission timing of the PDCCH #1 or the DCI #1 transmitted first (for example, slot #n)).

Fig. 4 illustrates a case where the PDSCH is scheduled using the multi-PDCCHs/multi-DCI, but the present invention is not limited thereto. In a case where the PUSCH is scheduled by using the multi-PDCCHs/multi-DCI, the UE may determine that the PUSCH is scheduled in a slot that is K2 away from a specific time reference (for example, the transmission timing (for example, slot #n) of the PDCCH #1 or the DCI #1 transmitted first.). Alternatively, the same applies to an operation in which a time domain (for example, transmission timing/reception timing) is determined with reference to the PDCCH/DCI.

Fig. 4 illustrates a case where the multi-PDCCHs/multi-DCI is allocated to different slots (inter-slot PDCCH repetition), but the present invention is not limited thereto. The multi-PDCCHs/multi-DCI may be allocated to the same slot (for example, different sub-slots/mini slots/symbols in the same slot.).

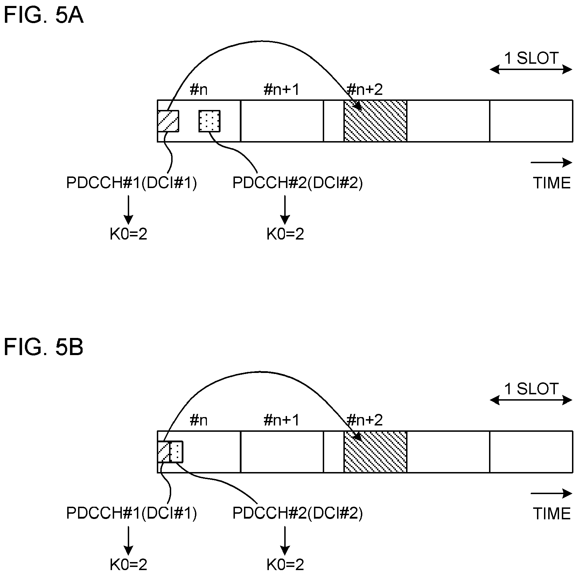

Fig. 5A illustrates a case where multi-PDCCHs/multi-DCI is allocated in the same slot (intra-slot PDCCH repetition). Here, a case is illustrated in which the PDCCH #1 and the PDCCH #2 are allocated to different symbols of the slot #n, and the slot offset K0 values instructed by the DCI #1 transmitted on the PDCCH #1 and the DCI #2 transmitted on the PDCCH #2 are the same (here, 2) .

The UE may interpret/apply the time-related information included in each DCI using a specific PDCCH (here, PDCCH #1) among the plurality of PDCCHs as a time reference.

Fig. 5B illustrates a case where the multi-PDCCHs/multi-DCI is allocated in the same mini slot (intra-mini slot PDCCH repetition). The mini slot may be a time interval configured in units of predetermined symbols (for example, 2, 3, or 7 symbols). Also, a mini slot may be referred to as a "sub-slot". Alternatively, the mini slot may be set simply as a time shorter than the sub-slot.

Here, a case is illustrated in which the PDCCH #1 and the PDCCH #2 are allocated to different symbols (for example, adjacent symbols) included in the slot #n, and the slot offset K0 values indicated by the DCI #1 transmitted on the PDCCH #1 and the DCI #2 transmitted on the PDCCH #2 are the same (here, 2).

The UE may interpret/apply the time-related information included in each DCI using a specific PDCCH (here, PDCCH #1) among the plurality of PDCCHs as a time reference.

Here, the case where the PDCCH transmitted first is used as the time reference has been described, but the present invention is not limited thereto. Another PDCCH (for example, the last transmitted or last placed PDCCH in the time domain) may be used as the time reference. In this case, the UE may interpret/apply the time-related information with reference to the last transmitted PDCCH.

Alternatively, the specific PDCCH/DCI serving as the time reference may be determined on the basis of a predetermined parameter corresponding to each PDCCH (or CORESET of each PDCCH). The predetermined parameter may be at least one of a TRP index, a CORESET pool index, and a TCI state ID.

For example, the specific PDCCH/DCI may be the PDCCH/DCI corresponding to the minimum/maximum TRP index (or CORESET pool index) among the repeatedly transmitted PDCCHs (for example, multi-PDCCHs/multi-DCI).

Alternatively, the specific PDCCH/DCI may be a PDCCH/DCI corresponding to a minimum/maximum TCI state ID among repeatedly transmitted PDCCHs (for example, multi-PDCCHs/multi-DCI). The TCI state corresponding to the PDCCH/DCI may be a TCI state corresponding to the CORESET used for transmission of the PDCCH/DCI. Furthermore, in a case where the CORESET pool index is set, the CORESET corresponding to the CORESET pool index with the minimum/maximum index may be selected.

Between multi-PDCCHs (or multi-DCI) to which repeated transmission is applied, predetermined transmission parameters (or between one or more predetermined transmission parameters) may be set in association with each other. The predetermined transmission parameter may be at least one of a control channel element (CCE), a resource element group (REG), a search space, a search space set, and a CORESET.

For example, the predetermined transmission parameter may be associated and set between a PDCCH serving as a time reference (For example, a PDCCH that is first transmitted in repeated transmissions) and another PDCCH. As an example, between transmission parameters of a plurality of PDCCHs to which repetition is applied, a predetermined transmission parameter may be set based on a repetition order (alternatively, in association with the transmission order,). The UE can determine the transmission order (for example, the first transmitted PDCCH) of each PDCCH on the basis of the information regarding the repetition of the PDCCH (for example, the number of repetitions, the repetition cycle, and the like) and the transmission parameter corresponding to each PDCCH.

As described above, the UE is configured to be able to recognize/grasp the PDCCH serving as the time reference from other PDCCHs, and thus, even in a case where the UE misdetects the PDCCH serving as the time reference, it is possible to perform transmission and reception by appropriately interpreting/applying the time-related information (for example, the same value) included in each DCI.

In a case where DL transmission/UL transmission is scheduled using repeated transmission of the PDCCH, the transmission timing of each PDCCH may be limited. For example, the transmission timing of each PDCCH may be controlled based on at least one of the following Option 2-1 to Option 2-2.

### <Option 2-1>

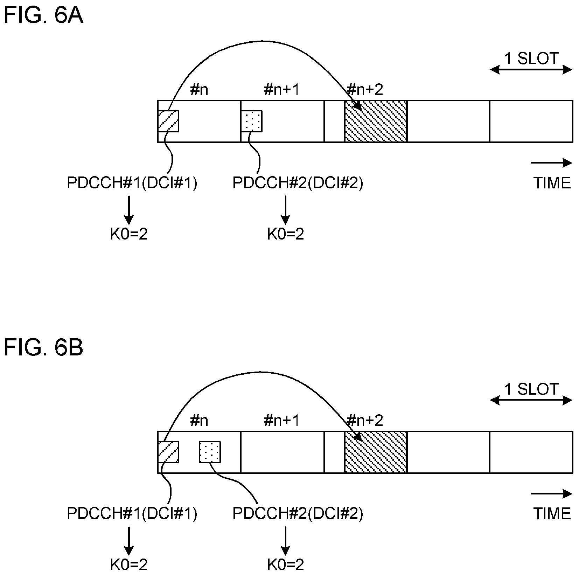

The PDCCH repeated transmissions (for example, TDM PDCCH repetition) allocated to different time domains may be configured such that inter-slot PDCCH repetition (See Fig. 6A) is not supported. In other words, at least one of intra-slot PDCCH repetition and intra-mini slot PDCCH repetition (See Fig. 6B) may be supported.

It is also conceivable that the UE misdetects a PDCCH (for example, the first transmitted PDCCH) serving as a time reference, erroneously recognizes another PDCCH as a time reference, and interprets/applies the time-related information included in each DCI. In a case where the PDCCH repeated transmission is applied in the same slot, even when the UE misdetects the PDCCH serving as the time reference and recognizes another PDCCH as the time reference, the same slot is set as the time reference.

Therefore, even in a case where the UE misdetects the PDCCH serving as the time reference, it is possible to appropriately determine the time domain resource of the physical shared channel whose schedule is controlled on the basis of an offset of a slot level.

### <Option 2-2>

The PDCCH repetition transmission (for example, TDM PDCCH repetition) allocated to different time domains may be configured to support only intra-mini slot PDCCH repetition. In other words, the PDCCH repeated transmissions allocated to different time domains may have a configuration in which inter-slot PDCCH repetition and intra-slot PDCCH repetition are not supported.

In such a case, when the mini slot level offset is supported, the UE can appropriately determine the time domain resource of the physical shared channel to which the mini slot level offset is applied even if the UE misdetects the PDCCH serving as the time reference and erroneously recognizes another PDCCH as the time reference.

### <Field Setting for Time Reference>

In the PDCCH repeated transmissions (for example, TDM PDCCH repetition) allocated to different time domains, a field (for example, a new field) for determining a PDCCH serving as a time reference may be set in the DCI. For example, a field indicating whether the PDCCH is a PDCCH serving as a time reference (For example, is the PDCCH transmitted first in the repeated transmission?) may be added to each PDCCH.

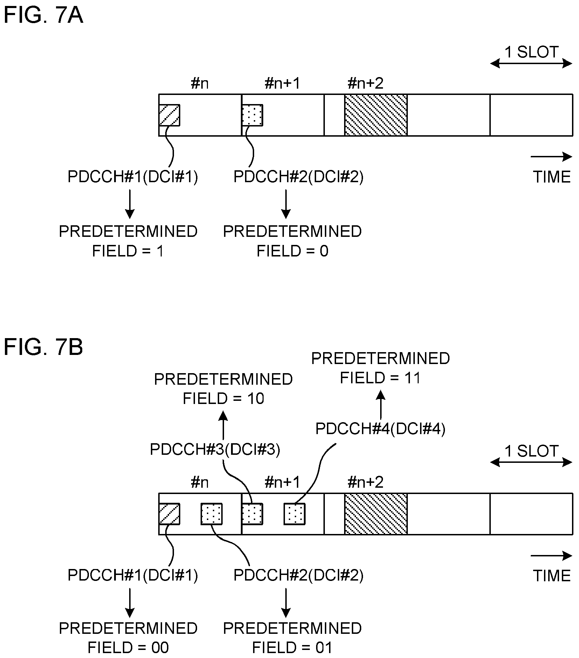

For example, a 1-bit predetermined field may be set, and in a case where the predetermined field value is 1, it may indicate that it is a PDCCH (or the first PDCCH) serving as a time reference, and in a case where the predetermined field value is 0, it may indicate that it is not a PDCCH (or the first PDCCH) not serving as a time reference (See Fig. 7A).

Alternatively, a predetermined field indicating the order of transmission in a time direction in the repeated transmission may be set in the DCI. For example, a 2-bit predetermined field may be set, and in a case where the predetermined field value is 00, it may be indicated that the predetermined field value is a PDCCH serving as a time reference (or the first PDCCH), in a case where the predetermined field value is 01, it may be indicated that the predetermined field value is a second PDCCH, in a case where the predetermined field value is 10, it may be indicated that the predetermined field value is a third PDCCH, and in a case where the predetermined field value is 11, it may be indicated that the predetermined field value is a fourth PDCCH (See Fig. 7B).

Fig. 7B illustrates a case where the predetermined field is set by two bits, but the present invention is not limited thereto. A size of the predetermined field (or the number of bits) may be determined based on the maximum number of repeated transmissions.

As described above, in the PDCCH repeated transmissions (for example, TDM PDCCH repetition) allocated to different time domains, the content of the time-related information notified in the DCI transmitted on each PDCCH is set to be the same, whereby an increase in the overhead of the DCI can be suppressed. For example, it is assumed that a slot offset and another parameter (for example, start symbol S, length L) are set in association with each other (For example, it is set corresponding to a DCI code point.). In such a case, it is not necessary to increase the number of combination candidates of the slot offset and other parameters by setting the slot offset of each DCI to the same value.

### (Third Aspect)

In a third aspect, a case where transmission of DCI (same DCI payload content) having different payload contents is supported/allowed by PDCCH repetition (TDM PDCCH repetition) transmitted in different time domains will be described. That is, this corresponds to a case where different DCI payload contents are notified to the UE by the multi-PDCCHs.

The different payload contents may be a case where the values of some predetermined fields of the fields included in each DCI are set to be the same.

The predetermined field may be a notification field of the time-related information (alternatively, the timing-related information). For example, the predetermined field may be at least one of a time domain resource allocation (for example, time domain resource assignment) field and a HARQ-ACK feedback timing instruction (for example, PDSCH-to-HARQ feedback timing indicator) field.

In a case where a predetermined physical shared channel is scheduled by a plurality of pieces of DCI respectively transmitted on PDCCHs allocated to different time domains, and content (for example, payload content) of the plurality of pieces of DCI is different is supported, the UE may interpret/apply, for each PDCCH/DCI, the time-related information (alternatively, the timing-related information) included in the DCI based on different time references.

For example, the UE may determine the time domain resource of the signal/channel (for example, a physical shared channel) scheduled in each DCI based on the notification field of the time-related information included in the DCI transmitted on each PDCCH and the PDCCH (alternatively, the PDCCH transmission timing) corresponding to each DCI.

The values of the time-related information included in each DCI may be different. However, the actual timings (for example, the scheduled timing) instructed by the time-related information (for example, the time domain resource allocation of the physical shared channel) included in each DCI may be the same.

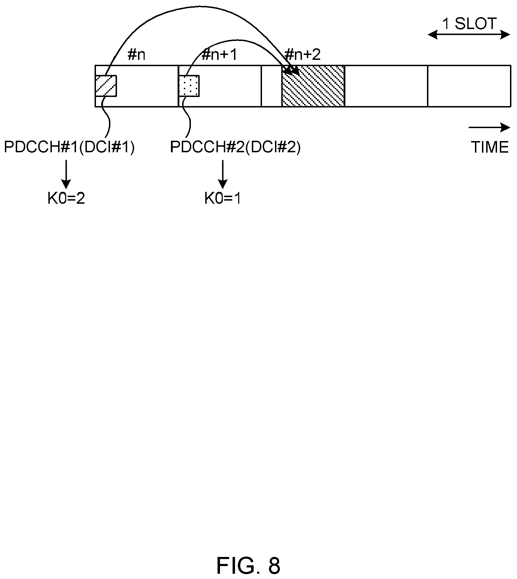

For example, a case where the values of the slot offsets K0 included in each DCI are different is assumed (See Fig. 8). The UE may determine the location/timing at which the PDSCH is scheduled with reference to the PDCCH corresponding to each DCI. Here, a case where the slot offset 2 is designated by the DCI #1 transmitted on the PDCCH #1 allocated to the slot #n and the slot offset 1 is designated by the DCI #2 transmitted on the PDCCH #2 allocated to the slot #n+1 is illustrated.

The UE determines that the PDSCH is scheduled in a slot two slots away from the PDCCH #1 (here, the slot #n+2) and a slot one slot away from the PDCCH #2 (here, the slot #n+2). The UE may assume that the same time resource (for example, a slot) is specified by the DCI respectively transmitted on the repeated PDCCH.

Fig. 8 illustrates a case where the PDSCH is scheduled using the multi-PDCCHs/multi-DCI, but the present invention is not limited thereto. In a case where the PUSCH is scheduled by using the multi-PDCCHs/multi-DCI, the UE may interpret/apply the time-related information included in the DCI with reference to the timing of the PDCCH corresponding to each DCI.

In inter-slot PDCCH repetition, in a case where the slot level timing notification in the slot #n is p, the slot level timing notification in the slot #n+1 may be p-1.

In the intra-slot PDCCH repetition, the slot level timing notifications included in all the DCI transmitted in the slot #n may be the same (For example, p is included in all DCIs.). On the other hand, in the intra-slot PDCCH repetition, in a case where the timing notification of the slot level in the sub-slot #m is p, the timing notification of the sub-slot level in the slot #m+1 may be p-1.

In the PDCCH repetition (intra-mini slot PDCCH repetition) in the mini slot, the slot level timing notifications included in all the DCIs transmitted in the slot #n may be the same (For example, p is included in all DCI.). In the PDCCH repetition (intra-mini slot PDCCH repetition) in the mini slot, timing notifications at the sub-slot level included in all pieces of DCI transmitted in the sub-slot #m may be the same (For example, p is included in all DCIs.). On the other hand, in the PDCCH repetition (intra-mini slot PDCCH repetition) in the mini slot, in a case where the timing notification of the slot level in the mini-sub-slot #r is p, the timing notification of the sub-slot level in the mini slot #r+1 may be p-1.

The same content (for example, the same value/the same bit value) may be set in other fields other than the field of the time-related information included in the DCI (for example, the time domain resource allocation field). The UE may assume that values of other fields (for example, a frequency domain resource allocation field or the like.) other than the field of the time-related information included in the multi-DCI to be repeatedly transmitted are set to be the same.

Between multi-PDCCHs (or multi-DCI) to which repeated transmission is applied, predetermined transmission parameters (or between one or more predetermined transmission parameters) may be set in association with each other. The predetermined transmission parameter may be at least one of a control channel element (CCE), a resource element group (REG), a search space, a search space set, and a CORESET.

### <Field Setting for Time Reference>

In the PDCCH repeated transmissions (for example, TDM PDCCH repetition) allocated to different time domains, a predetermined field (for example, a new field) for determining a PDCCH serving as a time reference may be set in the DCI. For example, a predetermined field indicating whether the PDCCH is a PDCCH serving as a time reference (For example, is the PDCCH transmitted first in the repeated transmission?) may be added to each PDCCH.

For example, a 1-bit predetermined field may be set, and in a case where the predetermined field value is 1, it may indicate that it is a PDCCH (or the first PDCCH) serving as a time reference, and in a case where the predetermined field value is 0, it may indicate that it is not a PDCCH (or the first PDCCH) not serving as a time reference.

Alternatively, a predetermined field indicating the order of transmission in a time direction in the repeated transmission may be set in the DCI. For example, a 2-bit predetermined field may be set, and in a case where the predetermined field value is 00, it may be indicated that the predetermined field value is a PDCCH serving as a time reference (or the first PDCCH), in a case where the predetermined field value is 01, it may be indicated that the predetermined field value is a second PDCCH, in a case where the predetermined field value is 10, it may be indicated that the predetermined field value is a third PDCCH, and in a case where the predetermined field value is 11, it may be indicated that the predetermined field value is a fourth PDCCH.

### (Variation 1)

For PDCCH repetition utilizing frequency division multiplexing (FDM)/space division multiplexing (SDM), the UE may assume that each PDCCH/DCI contains the same DCI payload content (for example, at least time-related information). In a case where the PDCCH repeated transmission uses FDM/SDM, for example, it may be replaced with a case where multi-PDCCHs/multi-DCI is transmitted in the same time domain (for example, the same symbol).

In such a case, the UE may interpret/apply the time-related information (or a timing-related instruction) included in the multi-PDCCHs/multi-DCI based on at least one of the following Option 3-1 and Option 3-2.

### <Option 3-1>

The UE may determine a scheduled time domain resource according to time-related information notified in any PDCCH/DCI in the repeatedly transmitted PDCCHs (for example, multi-PDCCHs/multi-DCI).

### <Option 3-2>

The UE may determine a scheduled time domain resource according to time-related information notified in a specific PDCCH/DCI among repeatedly transmitted PDCCHs (for example, multi-PDCCHs/multi-DCI).

The specific PDCCH/DCH may be a PDCCH/DCI having a minimum/maximum frequency index (or a CCE index) among repeatedly transmitted PDCCHs (for example, multi-PDCCHs/multi-DCI).

Alternatively, the specific PDCCH/DCI may be the PDCCH/DCI corresponding to the minimum/maximum TRP index (or CORESET pool index) among the repeatedly transmitted PDCCHs (for example, multi-PDCCHs/multi-DCI).

Alternatively, the specific PDCCH/DCI may be a PDCCH/DCI corresponding to a minimum/maximum TCI state ID among repeatedly transmitted PDCCHs (for example, multi-PDCCHs/multi-DCI). The TCI state corresponding to the PDCCH/DCI may be a TCI state corresponding to the CORESET used for transmission of the PDCCH/DCI. Furthermore, in a case where the CORESET pool index is set, the CORESET corresponding to the CORESET pool index with the minimum/maximum index may be selected.

The second aspect and the third aspect may be applied only to PDCCH repetition (TDM PDCCH repetition scheme) that utilizes TDM. Alternatively, the second aspect and the third aspect may be applied only to an inter-slot/intra-slot/intra-mini slot TDM PDCCH repetition.

### (Variation 2)

A downlink assignment indicator (DL allocation index) (DAI) may also a DAI field. Furthermore, the DAI field may be split into a counter DAI (cDAI) and a total DAI (tDAI).

The counter DAI may indicate a counter value of downlink transmission (PDSCH, data, TB) scheduled within a predetermined period. For example, the counter DAI in the DCI for scheduling data within the predetermined period may indicate the number counted in the frequency domain (for example, CC index order) first within the predetermined period and then in the time domain (time index order).

The total DAI may indicate a total value (total number) of data scheduled within a predetermined period. For example, the total DAI in the DCI for scheduling data in a predetermined time unit (for example, PDCCH monitoring opportunities) within the predetermined period may indicate the total number of data scheduled up to the predetermined time unit (Also referred to as a point, timing, and the like.) within the predetermined period.

In the multi-TRP scenario, in a case where PDCCHs are repeatedly transmitted from a plurality of TRPs, how to control (or interpret by the UE) the DAI field included in the DCI transmitted on each PDCCH becomes a problem.

In a case where the DAI respectively included in the DCI transmitted on each PDCCH is set to the same value (For example, the same DCI payload is applied to the PDCCH repetition.), the UE may interpret/apply the DAI field based on at least one of the following Option 4-1 and Option 4-2.

### <Option 4-1>

The DAI field in the repeated PDCCH (or multi-DCI) may be determined based on a specific PDCCH (for example, the PDCCH transmitted first in the repetition). That is, the DAI field of each DCI may be counted (alternatively, count up) only in the first PDCCH (or DCI) and not counted in the other PDCCHs.

Furthermore, a count value in the first PDCCH/DCI may be set in the DCI field included in each DCI. Note that, in a case where the PDCCH transmitted first in the repetition is the first PDCCH in the counter DAI (for example, in a case where DAI = 0,), the DAI included in each DCI may be 0 (may not be counted).

### <Option 4-2>

The DAI field in the repeated PDCCH (or multi-DCI) may be determined based on the last transmitted PDCCH in the repetition. In this case, a count value in the last PDCCH/DCI may be set in the DCI field included in each DCI. For example, in a case where the number of repetitions is n, a value counted at least n times of the number of repetitions may be set in the DCI field of each DCI.

In a case where application of different DCI payloads to the PDCCH repetition is supported, the UE may interpret/apply the DAI field based on at least one of the following Option 5-1 and Option 5-2.

### <Option 5-1>

Each DAI field in the PDCCH/DCI to which repeated transmission is applied may be set with a same value. In such a case, Option 4-1 or Option 4-2 may be applied.

### <Option 5-2>

Different values may be set for the DAI field in the repeated PDCCH (or multi-DCI). In such a case, the count control of the DAI field in each DCI may be controlled on the basis of a combination of a serving cell and a PDCCH monitoring occasion. Alternatively, control may be performed on the basis of a combination of at least one of the serving cell, the PDCCH monitoring occasion, and the TRP index.

In a case where different values are set in the DAI fields included in each PDCCH/DCI (and the same value is set in the time domain resource allocation field), the UE may determine the PDCCH serving as the time reference based on the DAI field (for example, the counter DAI).

### (UE Capability Information)

The UE may report the presence or absence of the support of the repetition of the PDCCH to the base station as UE capability information (UE capability). For example, the UE may report to the base station whether or not multiplexing (TDM/SDM/FDM) applicable to repetition of the PDCCH is supported.

The UE may report to the base station which of inter-slot (inter-slot) PDCCH repetition, intra-slot (intra-slot) PDCCH repetition, and intra-mini slot (intra-mini slot) PDCCH repetition is supported for PDCCH repetition (TDM PDCCH repetition) transmitted in different time domains.

Furthermore, the UE may also report the UE capability for the maximum number of repetitions to the base station. The maximum number of repetitions may be set separately for a plurality of multiplexing schemes (TDM/SDM/FDM) or may be set in common.

The UE may report which of a case where the DCI payload content is the same and a case where the DCI payload content is different is supported in the repeated PDCCH (for example, TDM PDCCH repetition between slots/in slots/in mini slots).

The UE may report, to the base station, whether or not to support notification of the number of repetitions based on the DCI.

The base station may control repeated transmission of the PDCCH based on capability information reported by the UE. Furthermore, the base station may notify/set the UE capability information described above to the UE by using higher layer signaling or the like.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

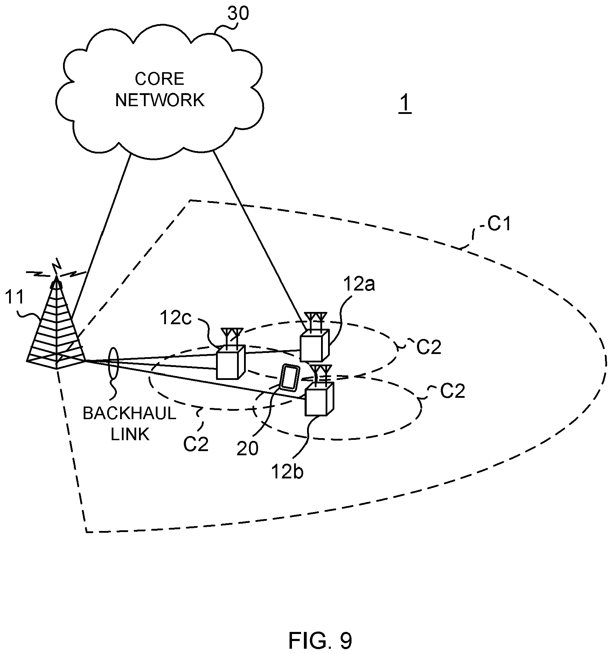

Fig. 9 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In EN-DC, an LTE (E-UTRA) base station (eNB) is a master node (MN), and an NR base station (gNB) is a secondary node (SN). In the NE-DC, an NR base station (gNB) is the MN, and an LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in a first Frequency Range 1 (FR1) and/or a second Frequency Range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency bands, definitions, and the like of the FR1 and FR2 are not limited thereto, and, for example, the FR1 may correspond to a frequency band higher than the FR2.

Further, the user terminal 20 may perform communication in each CC by using Time Division Duplex (TDD) and/or Frequency Division Duplex (FDD).

The plurality of base stations 10 may be connected in a wired (e.g., an optical fiber or an X2 interface in compliance with common public radio interface (CPRI)) or wireless manner (e.g., NR communication). For example, in a case where NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an Evolved Packet Core (EPC), a 5G Core Network (5GCN), or a Next Generation Core (NGC), or the like.

The user terminal 20 may a terminal that corresponds to at least one of communication methods such as LTE, LTE-A, and 5G.

In the radio communication system 1, a radio access scheme based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like, may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a physical downlink shared channel (PDSCH), a physical broadcast channel (PBCH), a physical downlink control channel (PDCCH), or the like, shared by the user terminals 20 may be used.

Further, in the radio communication system 1, as an uplink channel, a physical uplink shared channel (PUSCH), a physical uplink control channel (PUCCH), a physical random access channel (PRACH), or the like, shared by the user terminals 20 may be used.

User data, higher layer control information, a system information block (SIB), and the like are transmitted on the PDSCH. The PUSCH may transmit the user data, higher layer control information, and the like. Furthermore, a master information block (MIB) may be transmitted on the PBCH.

Lower layer control information may be transmitted by the PDCCH. The lower layer control information may include, for example, Downlink Control Information (DCI) including scheduling information of at least one of the PDSCH or the PUSCH.

Note that the DCI that schedules the PDSCH may be referred to as DL assignment, DL DCI, or the like, and the DCI that schedules PUSCH may be referred to as UL grant, UL DCI, or the like. Note that PDSCH is interchangeable with DL data, and PUSCH is interchangeable with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a certain search space based on search space configuration.

One search space may correspond to a PDCCH candidate corresponding to one or more aggregation levels. One or more search spaces may be referred to as a search space set. Note that "search space" and "search space set", "search space configuration", "search space set configuration", "CORESET" and "CORESET configuration", and the like, in the present disclosure are interchangeable.

Uplink Control Information (UCI) including at least one of Channel State Information (CSI), delivery acknowledgement information (which may be referred to as, for example, a Hybrid Automatic Repeat reQuest ACKnowledgement (HARQ-ACK), ACK/NACK, or the like), or a Scheduling Request (SR) may be transmitted by the PUCCH. A random access preamble for establishing connection with a cell may be transmitted on the PRACH.

Note that in the present disclosure, downlink, uplink, and the like may be expressed without "link". Various channels may also be expressed without adding "physical" in front of the channels.

In the radio communication system 1, a synchronization signal (SS), a downlink reference signal (DL-RS), and the like, may be transmitted. In the radio communication system 1, a Cell-Specific Reference Signal (CRS), a Channel State Information Reference Signal (CSI-RS), a DeModulation Reference Signal (DMRS), a Positioning Reference Signal (PRS), a Phase Tracking Reference Signal (PTRS), or the like, may be transmitted as the DL-RS.

The synchronization signal may be, for example, at least one of a Primary Synchronization Signal (PSS) and a Secondary Synchronization Signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals) ".

### (Base Station)

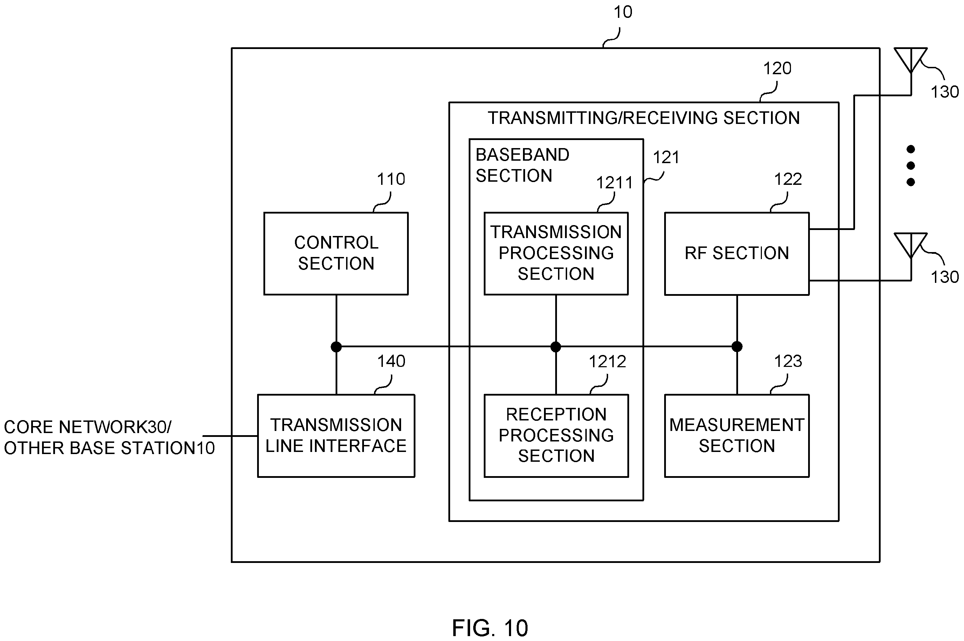

Fig. 10 is a diagram illustrating an example of a configuration of a base station according to one embodiment. The base station 10 includes a control section 110, a transmitting/receiving section 120, a transmitting/receiving antenna 130, and a transmission line interface 140. Note that one or more control sections 110, transmitting/receiving sections 120, transmitting/receiving antennas 130, and transmission line interfaces 140, respectively, may also be provided.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be constituted by a controller, a control circuit, and the like that are described based on common understanding in the technical field according to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a baseband circuit, a filter, a phase shifter, a measurement circuit, a transmitting/receiving circuit, and the like, which are described based on common understanding in the technical field pertaining to the present disclosure.

The transmitting/receiving section 120 may be configured as an integrated transmitting/receiving section or may be configured by a transmitting section and a receiving section. The transmitting section may include the transmission processing section 1211 and the RF section 122. The receiving section may be implemented by the reception processing section 1212, the RF section 122, and the measurement section 123.

The transmitting/receiving antenna 130 can be constituted by an antenna, for example, an array antenna or the like, which is described based on common understanding in the technical field according to the present disclosure.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam or a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, on, for example, data, control information, and the like, acquired from the control section 110, to generate a bit string to be transmitted.

The transmitting/receiving section 120 (transmission processing section 1211) may perform transmission processing such as channel encoding (which may include error correcting coding), modulation, mapping, filtering processing, Discrete Fourier Transform (DFT) processing (if necessary), Inverse Fast Fourier Transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like, on the baseband signal and may transmit a signal in the radio frequency band via the transmitting/receiving antenna 130.

Meanwhile, the transmitting/receiving section 120 (RF section 122) may perform amplification, filtering processing, demodulation to a baseband signal, and the like on the signal in the radio frequency band received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data, and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be outputted to the control section 110.

The transmission line interface 140 may transmit/receive a signal (backhaul signaling) to and from an apparatus included in the core network 30, another base stations 10, and the like, and may acquire, transmit, and the like, user data (user plane data), control plane data, and the like, for the user terminal 20.

Note that the transmitting section and the receiving section of the base station 10 in the present disclosure may include at least one of the transmitting/receiving section 120, the transmitting/receiving antenna 130, or the transmission line interface 140.

The transmitting/receiving section 120 may transmit a plurality of pieces of downlink control information respectively transmitted by using a plurality of downlink control channels allocated to different time domains.

The transmitting/receiving section 120 may control the schedule of the physical shared channel using the plurality of pieces of downlink control information, and may control the schedule of the physical shared channel using the timing-related instruction information with a specific downlink control channel as a time reference when the content of the timing-related information included in each of the plurality of pieces of downlink control information is the same.

The transmitting/receiving section 120 may control the schedule of the physical shared channel using the plurality of pieces of downlink control information, and may control the schedule of the physical shared channel using the timing-related information included in each piece of downlink control information with the downlink control channel corresponding to each piece of downlink control information as a time reference when a case in which the content of the timing-related information included in each piece of downlink control information is different is supported.

### (User Terminal)

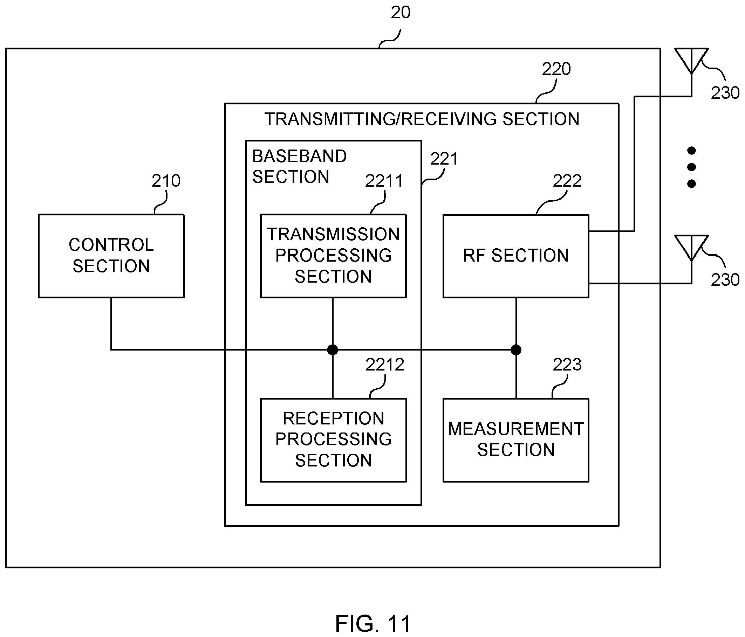

Fig. 11 is a diagram illustrating an example of a configuration of user terminal according to one embodiment. The user terminal 20 includes a control section 210, a transmitting/receiving section 220, and a transmitting/receiving antenna 230. Note that, one or more each of the control sections 210, the transmitting/receiving sections 220, and the transmitting/receiving antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data, control information, a sequence, and the like to be transmitted as signals, and may transfer the data, control information, sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmitting/receiving circuit, and the like that are described on the basis of common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that, whether or not to apply DFT processing may be determined on the basis of configuration of transform precoding. When the transform precoding is enabled for a channel (for example, PUSCH), the transmitting/receiving section 220 (transmission processing section 2211) may perform DFT processing as the transmission processing to transmit the channel by using a DFT-s-OFDM waveform, and when not, DFT processing does not have to be performed as the transmission processing.

The transmitting/receiving section 220 (RF section 222) may perform modulation to a radio frequency range, filtering processing, amplification, and the like on the baseband signal, to transmit a signal in the radio frequency range via the transmitting/receiving antenna 230.

Meanwhile, the transmitting/receiving section 220 (RF section 222) may perform amplification, filtering processing, demodulation to a baseband signal, and the like on the signal in the radio frequency range received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220, the transmitting/receiving antenna 230, or the transmission line interface 240.

The transmitting/receiving section 220 may receive a plurality of pieces of downlink control information respectively transmitted by using a plurality of downlink control channels allocated to different time domains.

The control section 210 may control at least one of reception and transmission of the physical shared channel scheduled by the plurality of pieces of downlink control information, and determine at least one of the reception timing and the transmission timing of the physical shared channel on the basis of the timing-related information with a specific downlink control channel as a time reference when the content of the timing-related information included in each of the plurality of pieces of downlink control information is the same.

The control section 210 may control at least one of reception and transmission of the physical shared channel scheduled by the plurality of pieces of downlink control information, and when a case in which the content of the timing-related information included in the plurality of pieces of downlink control information is different is supported, with the downlink control channel corresponding to each piece of downlink control information as a time reference, determine at least one of the reception timing and the transmission timing of the physical shared channel on the basis of the timing-related information included in each piece of downlink control information. The control section 210 may assume that the same time domain is designated by the timing-related information included in each piece of downlink control information.

The plurality of downlink control channels may be set in association with a predetermined transmission parameter.

The plurality of downlink control channels may be allocated in the same slot, in the same sub-slot, or in the same mini slot.

The plurality of pieces of downlink control information may each include information regarding specific downlink control information or information regarding a transmission order in time domain.

The plurality of downlink control channels may be supported for allocation between different slots.

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be implemented by combining the one apparatus or the plurality of apparatuses with software.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

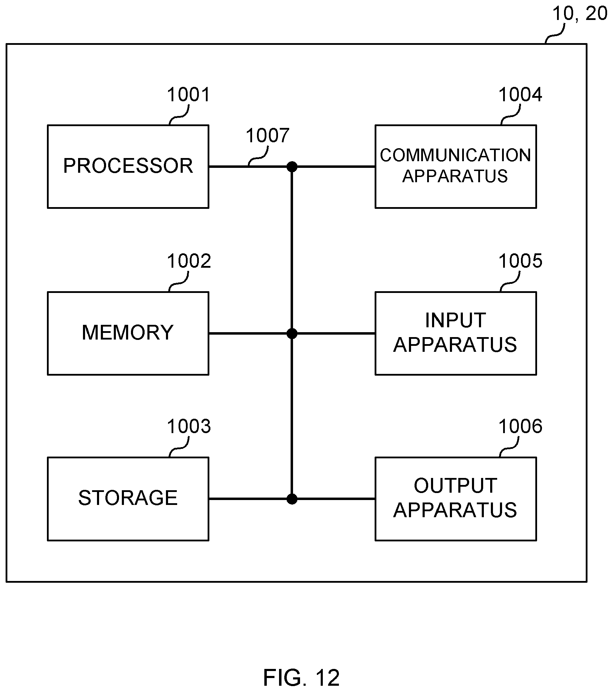

For example, the base station, the user terminal, and the like according to one embodiment of the present disclosure may function as a computer that executes the processing of the radio communication method of the present disclosure. Fig. 12 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that, in the present disclosure, terms such as apparatus, circuit, device, section, or unit are interchangeable. The hardware configuration of the base station 10 and the user terminal 20 may be designed to include one or more of the apparatuses illustrated in the drawings, or may be designed not to include some apparatuses.

For example, although only one processor 1001 is illustrated, a plurality of processors may be provided. Further, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by predetermined software (program) being read on hardware such as the processor 1001 and the memory 1002, by which the processor 1001 performs operations, controlling communication via the communication apparatus 1004, and controlling at least one of reading or writing of data from/to the memory 1002 and the storage 1003.

The processor 1001 may control the whole computer by, for example, running an operating system. The processor 1001 may be implemented by a central processing unit (CPU) including an interface with peripheral equipment, a control apparatus, an operation apparatus, a register, and the like. For example, at least part of the above-described control section 110 (210), transmitting/receiving section 120 (220), and the like may be implemented by the processor 1001.

The processor 1001 reads programs (program codes), software modules, data, etc. from at least one of the storage 1003 or the communication apparatus 1004 into the memory 1002, and performs various types of processing according to these. As the program, a program that causes a computer to execute at least a part of the operation described in the above-described embodiment is used. For example, the control section 110 (210) may be implemented by a control program that is stored in the memory 1002 and that operates in the processor 1001, and other functional blocks may be similarly implemented.

The memory 1002 is a computer-readable recording medium, and may be constituted by, for example, at least one of a Read Only Memory (ROM), an Erasable Programmable ROM (EPROM), an Electrically EPROM (EEPROM), a Random Access Memory (RAM), or other appropriate storage media. The memory 1002 may be referred to as a register, a cache, a main memory (primary storage apparatus), and the like. The memory 1002 can store programs (program codes), software modules, etc. that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM), and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmitting/receiving device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmitting/receiving antenna 130 (230), and the like described above may be implemented by the communication apparatus 1004. The transmitting/receiving section 120 (220) may be implemented by being physically or logically separated into the transmitting section 120a (220a) and the receiving section 120b (220b).

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Further, the base station 10 and the user terminal 20 may be constituted to include hardware such as a microprocessor, a Digital Signal Processor (DSP), an Application Specific Integrated Circuit (ASIC), a Programmable Logic Device (PLD), or a Field Programmable Gate Array (FPGA), and some or all of the functional blocks may be realized by using the hardware. For example, the processor 1001 may be implemented with at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be replaced with each other. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may be constituted with one or more periods (frames) in a time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for transmission and/or reception of a certain signal or channel. For example, the numerology may indicate at least one of SubCarrier Spacing (SCS), a bandwidth, a symbol length, a cyclic prefix length, a Transmission Time Interval (TTI), the number of symbols per TTI, a radio frame configuration, specific filter processing performed by a transceiver in the frequency domain, or specific windowing processing performed by a transceiver in the time domain.

The slot may include one or more symbols in the time domain (orthogonal frequency division multiplexing (OFDM) symbols, single carrier frequency division multiple access (SC-FDMA) symbols, and the like). Also, a slot may be a time unit based on numerology.

A slot may include a plurality of mini slots. Each mini slot may include one or more symbols in the time domain. Further, the mini slot may be referred to as a sub-slot. Each mini slot may include fewer symbols than the slot. A PDSCH (or PUSCH) transmitted in a time unit larger than the mini slot may be referred to as "PDSCH (PUSCH) mapping type A". A PDSCH (or a PUSCH) to be transmitted using a mini slot may be referred to as "PDSCH (PUSCH) mapping type B".

A radio frame, a subframe, a slot, a mini slot and a symbol all represent the time unit in signal communication. The radio frame, the subframe, the slot, the mini slot, and the symbol may be called by other applicable names, respectively. Note that time units such as frame, subframe, slot, mini slot, and symbol in the present disclosure are interchangeable.

For example, one subframe may be referred to as TTI, a plurality of consecutive subframes may be referred to as TTI, or one slot or one mini slot may be referred to as TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot" and so on, instead of a "subframe".

Here, a TTI refers to the minimum time unit of scheduling in radio communication, for example. For example, in the LTE system, a base station performs scheduling to allocate radio resources (a frequency bandwidth, transmission power, and the like that can be used in each user terminal) to each user terminal in TTI units. Note that the definition of TTIs is not limited to this.

The TTI may be a transmission time unit of a channel-coded data packet (transport block), a code block, a codeword, and the like, or may be a processing unit of scheduling, link adaptation, and so on. When the TTI is given, a time interval (e.g., the number of symbols) to which a transport block, a code block, a codeword, or the like, is actually mapped may be shorter than the TTI.

Note that, when one slot or one mini slot is referred to as a "TTI", one or more TTIs (that is, one or multiple slots or one or more mini slots) may be the minimum time unit of scheduling. Also, the number of slots (the number of mini slots) to constitute this minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than a usual TTI may be referred to as a shortened TTI, a short TTI, a partial TTI (a partial TTI or a fractional TTI), a shortened subframe, a short subframe, a mini slot, a sub-slot, a slot, and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in an RB may be determined based on a numerology.

Also, an RB may include one or more symbols in the time domain, and may be one slot, one mini slot, one subframe or one TTI in length. One TTI, one subframe, etc. may each be constituted with one or more resource blocks.

Note that one or more RBs may be referred to as a Physical Resource Block (PRB), a Sub-Carrier Group (SCG), a Resource Element Group (REG), a PRB pair, an RB pair, and so on.

Furthermore, a resource block may be constituted by one or more Resource Elements (REs). For example, one RE may be a radio resource field of one subcarrier and one symbol.

A bandwidth part (BWP) (which may be referred to as a partial bandwidth, or the like) may represent a subset of contiguous common resource blocks (RBs) for a certain numerology in a certain carrier. Here, the common RB may be specified by the index of the RB based on a common reference point of the carrier. PRBs may be defined in a BWP and numbered within the BWP.

The BWP may include a UL BWP (BWP for UL) and a DL BWP (BWP for DL). For the UE, one or more BWPs may be configured within one carrier.

At least one of the configured BWPs may be active, and it need not be assumed that the UE transmits/receives a predetermined signal/channel outside the active BWP. Note that "cell", "carrier", etc. in the present disclosure may be replaced with "BWP".

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

The information, parameters, etc. described in the present disclosure may be represented using absolute values, or may be represented using relative values with respect to predetermined values, or may be represented using other corresponding information. For example, a radio resource may be specified by a predetermined index.

The names used for parameters and so on in the present disclosure are in no respect limiting. Further, any mathematical expression or the like that uses these parameters may differ from those explicitly disclosed in the present disclosure. Because various channels (PUCCH, PDCCH, and the like) and information elements can be identified by any suitable names, various names allocated to these various channels and information elements are not restrictive names in any respect.

The information, signals, etc. described in the present disclosure may be represented using any of a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Information, signals, etc. can be output in at least one of a direction from a higher layer to a lower layer or a direction from a lower layer to a higher layer. Information, signals and so on may be input and output via a plurality of network nodes.

The information, signals and so on that are input and/or output may be stored in a specific location (for example, in a memory), or may be managed in a control table. The information, signals, and the like to be input and output can be overwritten, updated, or appended. The output information, signals, and the like may be deleted. The information, signals and so on that are input may be transmitted to other pieces of apparatuses.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and so on. Further, the RRC signaling may be referred to as an RRC message, and may be, for example, an RRC Connection Setup message, an RRC Connection Reconfiguration message, and so on. Further, notification of the MAC signaling may be performed using, for example, an MAC control element (CE).

Also, reporting of predetermined information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a predetermined value).

Software, whether referred to as "software", "firmware", "middleware", "microcode", or "hardware description language", or called by other names, should be interpreted broadly, to mean instructions, instruction sets, codes, code segments, program codes, programs, subprograms, software modules, applications, software applications, software packages, routines, subroutines, objects, executable files, execution threads, procedures, functions, and the like.

Also, software, commands, information and so on may be transmitted and received via communication media. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "Quasi-Co-Location (QCL)", "Transmission Configuration Indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" may be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station is sometimes referred to using terms such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of the base station and/or the base station subsystem that performs a communication service in this coverage.

As used in the present disclosure, the terms such as "mobile station (MS)", "user terminal", "user equipment (UE)", and "terminal" may be used interchangeably.

The mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable term.

At least one of the base station or the mobile station may be called as a transmission device, a reception device, a radio communication device, and the like. Note that at least one of the base station or the mobile station may be a device mounted on a moving body, a moving body itself, and the like. The moving body may be a transportation (for example, a car, an airplane, or the like), an unmanned moving body (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

Further, base station in the present disclosure is interchangeable with user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, an uplink channel and a downlink channel may be read as a side channel.

Likewise, the user terminals in the present disclosure may be interpreted as base stations. In this case, the base stations 10 may have the functions of the user terminals 20 described above.

In the present disclosure, an operation performed by the base station may also be performed by an upper node thereof in some cases. In a network including one or more network nodes with base stations, it is clear that various kinds of operation performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, although various methods have been described in the present disclosure with various components of steps using exemplary orders, the specific orders that are described herein are by no means limiting.

Each aspect/embodiment described in the present disclosure may be applied to a system using Long-Term Evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (xG(x is, for example, an integer or decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next-generation system expanded on the basis of the foregoing, and the like. Further, a plurality of systems may be combined (for example, a combination of LTE or LTE-A and 5G, and the like) and applied.

The phrase "based on" as used in the present disclosure does not mean "based only on", unless otherwise specified. In other words, the phrase "based on" means both "based only on" and "based at least on".

All references to the elements using designations such as "first" and "second" as used in the present disclosure do not generally limit the amount or sequence of these elements. These designations can be used in the present disclosure, as a convenient way of distinguishing between two or more elements. In this way, reference to the first and second elements does not imply that only two elements may be employed, or that the first element must precede the second element in some way.

The term "discriminating (determining)" as used in the present disclosure may include a wide variety of actions. For example, "determining" may be regarded as "determining" judging, calculating, computing, processing, deriving, investigating, looking up (or searching or inquiring) (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

Furthermore, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

Furthermore, "determining" as used herein may be interpreted to mean "assuming", "expecting", "considering" and so on.

The "maximum transmission power" described in the present disclosure may mean the maximum value of the transmission power, the nominal maximum transmission power (nominal UE maximum transmit power), or the rated maximum transmission power (rated UE maximum transmit power).

The terms "connected" and "coupled" used in the present disclosure, or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

In the present disclosure, when two elements are connected together, it is conceivable that the two elements are "connected" or "coupled" to each other by using one or more electrical wires, cables, printed electrical connections, and the like, and, as some non-limiting and non-inclusive examples, by using electromagnetic energy having wavelengths in the radio frequency domain, microwave region, or optical (both visible and invisible) region, or the like.

In the present disclosure, the terms "A and B are different" may mean "A and B are different from each other". Note that the phrase may mean that "A and B are different from C". The terms such as "separate", "coupled", and the like may be interpreted similarly to "different".

When "include", "including", and variations of these are used in the present disclosure, these terms are intended to be inclusive similarly to the term "comprising". Moreover, the term "or" used in the present disclosure is intended to be not an exclusive-OR.

In the present disclosure, when articles are added by translation, for example, as "a", "an", and "the" in English, the present disclosure may include that nouns that follow these articles are plural.

In the above, the invention according to the present disclosure has been described in detail; however, it is obvious to those skilled in the art that the invention according to the present disclosure is not limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided only for the purpose of explaining examples, and should by no means be construed to limit the invention according to the present disclosure in any way.

## Claims

1. A terminal comprising:
a receiver that receives a plurality of pieces of downlink control information respectively transmitted by using a plurality of downlink control channels allocated to different time domains; and
a controller that controls at least one of reception and transmission of a physical shared channel scheduled by the plurality of pieces of downlink control information, wherein
when a case in which contents of timing-related information respectively included in the plurality of pieces of downlink control information are different is supported, the controller determines at least one of a reception timing and a transmission timing of the physical shared channel based on the timing-related information included in each of the pieces of downlink control information with a downlink control channel corresponding to each of the pieces of downlink control information as a time reference.

2. The terminal according to claim 1, wherein the controller assumes that a same time domain is designated by the timing-related information included in each of the pieces of downlink control information.

3. The terminal according to claim 1 or 2, wherein the plurality of downlink control channels is set in association with a predetermined transmission parameter.

4. The terminal according to any one of claims 1 to 3, wherein allocation of the plurality of downlink control channels to different slots is supported.

5. A radio communication method of a terminal, the radio communication method comprising the steps of:
receiving a plurality of pieces of downlink control information respectively transmitted by using a plurality of downlink control channels allocated to different time domains; and
controlling at least one of reception and transmission of a physical shared channel scheduled by the plurality of pieces of downlink control information, wherein
when a case in which contents of timing-related information respectively included in the plurality of pieces of downlink control information are different is supported, at least one of a reception timing and a transmission timing of the physical shared channel is determined based on the timing-related information included in each of the pieces of downlink control information with a downlink control channel corresponding to each of the pieces of downlink control information as a time reference.

6. A base station comprising:
a transmitter that transmits a plurality of pieces of downlink control information respectively transmitted by using a plurality of downlink control channels allocated to different time domains; and
a controller that controls a schedule of a physical shared channel using the plurality of pieces of downlink control information, wherein
when a case in which contents of timing-related information respectively included in the plurality of pieces of downlink control information are different is supported, the controller controls the schedule of the physical shared channel using the timing-related information included in each of the pieces of downlink control information with a downlink control channel corresponding to each of the pieces of downlink control information as a time reference.
